# EUROPEAN PATENT SPECIFICATION

(11) **EP 1 899 971 B1**
(45) Date of publication and mention of the grant of the patent: **28.10.2015**
(21) Application number: 06786174.0
(22) Date of filing: 30.06.2006
(51) Int. Cl.: G06F 3/0481, H04N 7/16, H04N 21/4143, H04N 21/4402, H04N 21/443, G11B 27/00

(54) **SCREEN MANAGEMENT SYSTEM FOR MEDIA PLAYER**
BILDSCHIRMVERWALTUNGSSYSTEM FÜR EINEN MEDIA-PLAYER
SYSTEME DE GESTION D'ECRAN POUR LE LECTEUR MULTIMEDIA

(30) Priority: 30.06.2005 US 696230 P
(43) Date of publication of application: 19.03.2008
(73) Proprietor: Sling Media, Inc., Foster City, CA 94404 (US)
(72) Inventor: KRIKORIAN, Jason, Foster City, CA 94404 (US)
(74) Representative: Beck Greener
(86) International application number: PCT/US2006/025911
(87) International publication number: WO 2007/005789

(56) References cited:
- US-A1- 2002 112 247
- US-A1- 2002 167 458
- US-A1- 2003 001 880
- US-A1- 2005 050 462
- US-A1- 2005 060 759
- US-A1- 2005 138 560
- US-A1- 2006 107 226
- US-B1- 6 243 596
- US-B1- 6 892 359

## Description

The present invention relates to a method of viewing video on a client device by way of a media player, and to a media player.

The personal computer is increasingly becoming a point of media consumption for consumers. While the personal computer was initially focused on productivity tasks, it is more and more being used by consumers for entertainment - e.g., to watch video content and listen to music and other audio content. Naturally, this has resulted in the creation of many media players designed for the personal computer. Media players are software applications that play or stream audio and video. Common examples of these players include the Windows Media Player from Microsoft, and the RealOne player from RealNetworks.

Whilst these applications may do a fine job actually playing the media content, they fall short in addressing the needs of a multi-tasking consumer. Most modem windows- based operating systems support multiple overlapping application windows. While this feature is very useful in multitasking environments, a user typically does not want the window in which a video is played to be obscured by other windows. Specifically, a consumer who wishes to view the media player while using other software applications is often left rearranging the various application windows on the computer screen in an attempt to achieve an optimal layout. The difficulty of this task is compounded as the user opens additional applications or windows, as these must also be arranged to avoid obscuring the media player.

Some previous systems addressed this difficulty with an "always on top" option for the media player window. This option ensures that a media player window always stays visible in front of other windows, but while addressing one problem it introduces some additional problems. For example, the area of the secondary window that is obscured by the media player window may become relevant to the user's task. In such a case, the user would be forced to move the media player window to view the content, and then rearrange the layout once more after this is done. This process becomes tedious and can be quite frustrating for the user who wants to perform common tasks - such as checking email while watching a baseball game.

Media players for placeshifting systems encounter these and additional problems as compared to traditional media players, in a placeshifting system, such as the SLINGBOX(TM) from Sling Media, Inc., a media player client application runs on a client device and receives a media stream from a personal media broadcaster. The personal media broadcaster obtains media content from one or more A/V sources and is often located in the home or at a remote location from the client device, in addition to having a video display, the media player client application includes controls for adjusting content from the personal media broadcaster, such as changing the channel or switching the A/V source being broadcast. Accordingly, these controls and the video display further complicate the screen real estate problem. Moreover, because of the nature of a placeshifting system, a user is more likely to watch the media player of a placeshifting system while performing other tasks on the computer, such as email. This multitasking thus compounds the screen real estate problem more than for traditional media players, which are typically used to watch a particular media item between computing tasks. Accordingly, media players for placeshifting systems require an even more robust screen management system than traditional media players.

US2005/0060759 describes the provision of a multi-window screen display simultaneously showing different programming, such as national and local programming.

US2003/0001880 relates generally to media production and describes a streamer configured to display one or more components in the same frame or window.

US2002/0112247 describes a method for viewing video on a client device by way of a media player that comprises computer program code and is enabled to play received video data, wherein the client device includes a display having an active area, the method comprising:
receiving video data at the client device and rendering the video data into a playable video stream; and
playing the video stream in a window of the media player, wherein the media player window is within the active area of the display of the client device.

The present invention seeks to enable a computer user to enjoy an audio/video experience conveniently while at the same time working with other software applications.

According to a first aspect of the present invention there is provided a method for viewing video on a client device by way of a media player as described above, characterised in that the method further comprises placing the media player into docked mode in which the active area of the display is partitioned into a media player sidebar for displaying the video stream, and a resized active area for other applications running on the client device; wherein the media player sidebar is reserved for the media player and is unavailable for the other applications.

In an embodiment, a personal media broadcasting system comprises a personal media broadcaster and the media player configured to run on the client device. The personal media broadcaster receives an analog or digital media signal from an audio/video source, constructs a media stream from the analog signal, and transmits the media stream over a computer network. Running the media player, the client device communicates with the personal media broadcaster over the computer network to receive the media stream. The client device includes the display, and a desktop for interacting with other programs on the client device. Accordingly, the client device plays the media stream in the sidebar, allowing a user to interact with other programs via the desktop while viewing the played media stream.

In an embodiment, in a method as defined above, in the docked mode, the media player resizes, rescales and moves the active area so that all other icons, windows, and other interface elements within the active area are shifted to make room for placement of the media player sidebar.

The method may further comprise resizing the sidebar in response to a user command. Preferably, the method further comprises rescaling the active area when the sidebar is resized.

Preferably, the method further comprises causing the media player to move the sidebar responsive to a user command.

In an embodiment, the method further comprises causing the media player to adjust the media stream in response to user command.

The present invention also extends to a media player that comprises computer program code enabling play of received video data on a client device, wherein the client device includes a display having an active area,
wherein, when run on the client device, the media player enables the client device to receive video data and to render the video data into a playable video stream; and
wherein the video data is played within a window of the media player, the media player window being within the active area of the display of the client device;
the media player being characterised in that it is placeable into docked mode in which the active area of the display is partitioned into a media player sidebar for displaying the video stream, and a resized active area for other applications running on the client device;
and in that the media player sidebar is reserved for the media player and is unavailable for the other applications.

In use, the media player is configured to run on the client device and a user can provide a dock command to dock the media player window on the client device whereupon the video stream is moved to the sidebar.

The docked mode for the media player enables a user to enjoy an audio/video experience conveniently while at the same time working with other software applications. Many new multimedia-oriented computers have wide screen displays, and many common applications (such as email and word processing programs) do not take full advantage of the extended horizontal space. Accordingly, embodiments of the invention make use of this space while minimizing the effect on other applications.

In an embodiment, the media player comprises computer program code which, in response to a dock command creates the media player sidebar, reduces the active area, and rescales the active area.

Preferably, the active area of the display comprises interfaces for other applications running on the client device, and the interfaces for the other applications are disallowed within the media player sidebar.

The media player may further comprise computer program code for:
receiving an undock command to undock the media player window;
eliminating the media player sidebar from the display;
enlarging the active area of the display;
rescaling the active area; and
playing the video stream in the media player window in the active area of the display.

In an embodiment there is provided computer program code for:
receiving a resize command to resize the media player sidebar;
resizing the sidebar according to the resize command;
resizing the active area according to the resized sidebar; and
rescaling the active area of the display.

Preferably, the media player further comprises computer program code for:
receiving a move command to move the media player sidebar to a different portion of the display;
moving the sidebar according to the move command; and
adjusting the active area of the display according to the movement of the sidebar.

Where the video data is received from a remote source, the media player may contain computer program code for:
receiving a user command to adjust the video data received from a remote source; and
sending the user command to the remote source to adjust the video data received therefrom,
and wherein the media player sidebar includes controls for a number of user commands to adjust the video data.

In an embodiment, the active area of the display is a desktop of a windows-based operating system.

Preferably, the client device comprises a cellular phone.

Embodiments of the present invention will hereinafter be described, by way of example, with reference to the accompanying drawings, in which:
FIG. 1 is a schematic drawing of a system for remote viewing of a media stream, including a media player;
FIG. 2 is a screen shot showing a media player not in docked mode;
FIG. 3 is a screen shot showing a media player docked at a right side of the screen, in accordance with an embodiment of the invention; and
FIG. 4 is a screen shot showing a media player docked at a left side of the screen, in accordance with an embodiment of the invention.

A media player of an embodiment of the invention can be used in a variety of contexts. For example, the media player can be used as a stand alone or traditional media player, playing audio and video clips located on a local or network disk, or streamed via the Internet from some other remote server. The physical components used in the system may depend on the method in which the media content is delivered to one or more consumers of that content. Moreover, media content may be delivered from the source to the destination device through a variety of means, including, but not limited to, over the air via analog or digital RF transmission; IP transmission delivered over a wired network or a wireless network (or a combination) in a unicast or multicast method; wireless or wired networks (which may or may not be IP) dedicated to the delivery of multimedia content; cable, twisted pair, or fiber networks; and satellite transmission.

If delivered over an IP network, the media stream may be converted from analog to digital form if the stream is not already in digital form. This allows for any type of traditionally analog broadcast media to be digitized and delivered to an IP device. Alternatively, digital media may be obtained from a server (e.g., operated by a content provider), a network access server, a network storage device, or another personal computer in a peer-to-peer scenario. The digital media is then sent over a network (such as the Internet, a private WAN, a LAN, a cellular network, or any other network suitable for delivering digital data) to a client device. The client device may be a personal computer, a cellular phone, a PDA, a dedicated set top box that outputs to a television or monitor, or any other type of device that can receive and render the digital media data. The method for delivery and consumption of the content may also vary broadly, including, but not limited to, traditional linear programming, video on demand, pay-per-view (in set intervals), and "store and forward" delivery. In store and forward delivery, content may be loaded on or written to a storage device, which then sends the content to the destination device via a data network or any number of other methods, for viewing when available. The store may be centrally managed by a service or content provider, contained within a person's home, or even located within a placeshifting device.

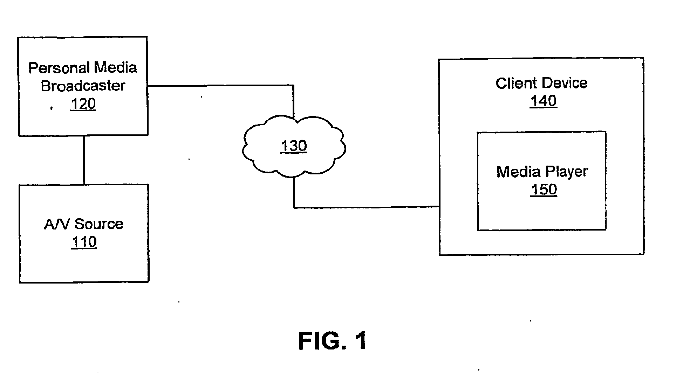

In one particularly useful application of the screen management system, the video content is delivered by a placeshifting system. A placeshifting system, also called a personal media broadcasting system, enables video distribution over a computer network wherein a user can view and control one or more A/V sources over the computer network from a remote location. Embodiments of placeshifting systems are described in U.S. Published Application No. 20060095471. FIG. 1 illustrates a placeshifting system, in which a media player 150 is used in connection with a personal media broadcaster 120.

In a placeshifting system, a personal media broadcaster 120 receives media content from an A/V source 110, which may be any among a variety of types of media source devices (such as DVD players, DVRs, television tuners, cable set-top boxes, and the like). Alternatively, the personal media broadcaster 120 may receive a signal from a media broadcaster and include an integrated tuner (such as a cable set-top box) for processing the received signal. The personal media broadcaster 120 then digitizes and compresses the content, processes the compressed content into a form transmittable over a network, and streams the compressed media content over a computer network 130 to a client device 140.

A media player 150 is a software application that runs on the client device 150, which may be any appropriate type of device capable of viewing the media. The media player 150 may allow a user to issue control commands (e.g., "channel up") from the client device 140 to the personal media broadcaster 120. Responsive to the control commands, the personal media broadcaster 120 causes the A/V source 110 to execute the command, thereby adjusting the content delivered to the personal media broadcaster 120 and, ultimately, to the client device 140. The personal media broadcaster 120 and the media player 150 may employ various techniques for buffering, transmitting, and viewing the content to improve the user's experience.

In the various system architectures in which the video content is obtained, the associated client device 140 includes a display screen for viewing the video content, in the case where the client device 140 is a general purpose multipurpose computing device, the display screen will commonly be used for applications in addition to viewing the video content. Accordingly, its display screen will be used in part for the video content and in part for the user interface of other applications.

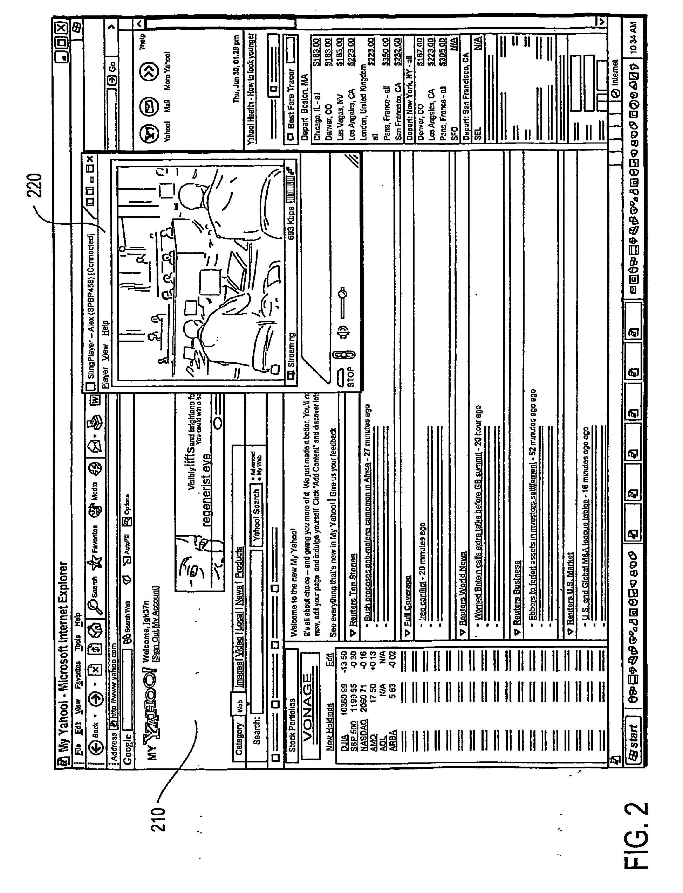

FIG. 2 is a screen shot of the display for a computing device in which the media player 150 and one or more other applications are running. The display screen comprises an active area 210, in which the user may interact with any of a variety of applications that can run on the client device 140. For a personal computer, this active area 210 is often referred to as the desktop, or includes the desktop, and it may contain any number of icons that represent object accessible to the personal computer and windows displaying the content of processes running on the computer, among other items. The media player 150 is also accessible via a media player window 220 that exists within the active area 210 of the display. The media player window may include a display portion in which the video content received from the client device 140 may be viewed and a control portion in which the user may issue commands to adjust the received video content.

FIG. 2 illustrates the media player 150 while in an undocked mode. In one embodiment, the client device 140 is configured to receive commands from a user to dock the media player 150. Responsive to such a command, the client device 140 puts the media player 150 in a docked mode, in this way, the media player 150 can be put into either one of a set of modes, including "docked" and "undocked" modes. When docked, the media player 150 can later be undocked. Alternatively, the media player 150 may be presented always in a docked mode.

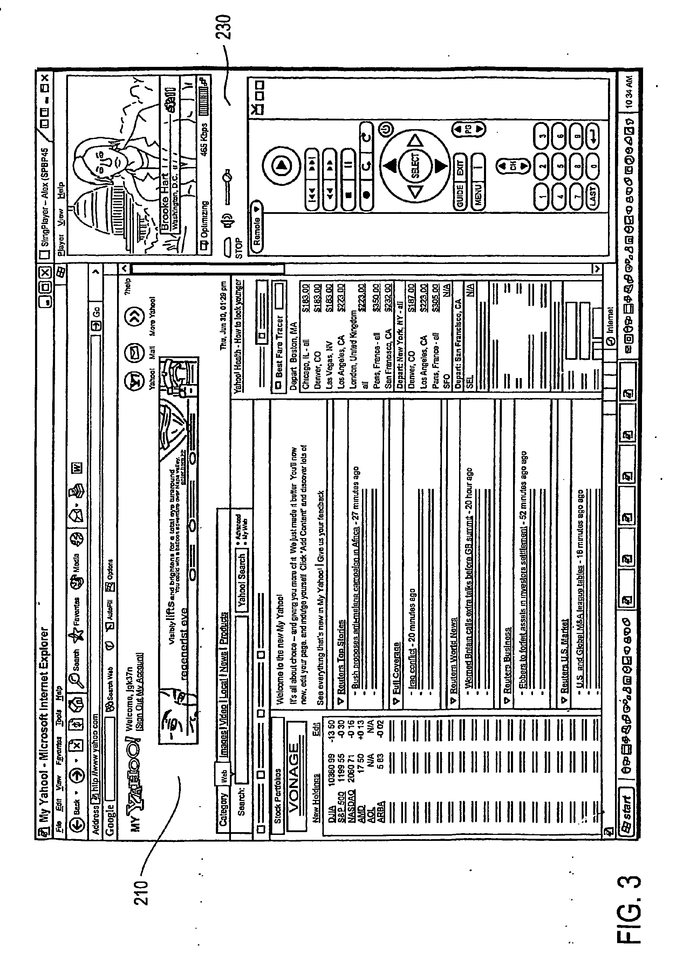

FIG. 3 is a screen shot of the media player 150 of FIG. 2 in a docked mode. When the media player 150 is put in the docked mode, the media player window 220 (from FIG. 2) becomes a media player sidebar 230 on a side of the display, as shown in FIG. 3. Like the media player window 220, the media player sidebar 230 may also include user controls for adjusting the video content received from a remote source by the client device 140. As illustrated, the media player sidebar 230 is docked on the right side of the screen; however, the media player sidebar 230 maybe docked along any edge of the screen or in any desired portion of the screen. Beneficially, when placed in a docked mode on a side edge of the screen for a widescreen display, the media player 150 uses a portion of the display that is often not used in many types of computing systems. In one embodiment, the media player 150 is placed in a docked mode by dragging its window near an edge of the screen, or by selecting an option manually from the media player window 220.

When the media player 150 is placed in the docked mode, there is no media player window 220 that can overlay on the other icons or other application windows that populate the active area 210. Instead, the media player 150 replaces this window 220 with the new media player sidebar 230 for displaying the video content. In this way, the media player sidebar 230 created is independent from the active area 210 of the client device 140, and a portion of the screen that is occupied by the media player sidebar 230 is essentially reserved for the media player 150. Because the display of the client device 140 is limited, the media player 150 also resizes, rescales, and moves as necessary the active area 210 so that all other icons, windows, and other interface elements are shifted to make room for placement of the media player sidebar 230.

The client device 140 and any applications or processes running thereon are made aware that the media player sidebar 230 portion of the screen is not available. Accordingly, and the other applications are placed in the remainder of the screen, the newly sized active area 210, which is essentially a resized desktop of the client device 140. Other applications running on the client device 140 may also take note of the reserved media player sidebar 230 space when they attempt to resize. For example, when a user normally gives an application a command to "maximize," it resizes to take up the maximum resolution of the display. When the media player 150 is in the docked mode, an application that is maximized will take up all of the active area 210 that is not currently occupied by media player. Advantageously, the display is effectively partitioned so that tasks performed in the active area 210 of the display are separate from video played in the media player sidebar 230 portion of the display.

The media player sidebar 230 can be increased or decreased in size, e.g., by clicking on the edge of the media player sidebar 230 and dragging it to the desired size. After a resizing of the media player sidebar 230, the content within the active area 210 may be automatically rescaled to account for the increase or decrease in available screen real estate due to the adjustment of the media player sidebar 230.

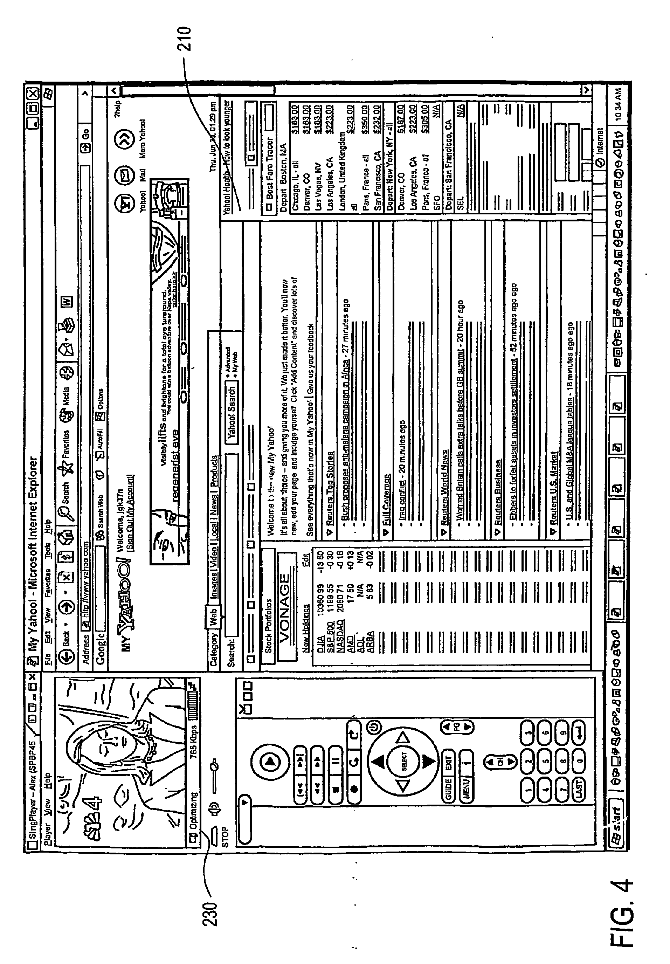

In addition to resizing, the media player sidebar 230 may also be resituated from one portion of the display screen to another. For example, when docked on a right edge of the display screen, the media player sidebar 230 can be moved to the left side of the display screen. When the media player sidebar 230 is moved, the active area 210 of the display screen, including the content therein, is moved accordingly to account for the newly available screed space. FIG. 4 is a screen shot of the display screen of FIG. 3 after the media player sidebar 230 is moved from a docked position on the right edge of the screen to a docked position on the left edge of the display screen. As the screen show shows, the content within the active area 210 automatically adjusts to this move.

The media player sidebar 230 can be implemented using a variety of techniques, depending on the type of client device 140 on which the media player 150 runs. For a typical person computer, many operating systems provide an application programming interface (API) that allows applications to implement the behavior of the media player sidebar 230. For example, the Microsoft WINDOWS(R) operating systems support APIs that allow software developers to implement a graphical user interface item called an "application desktop toolbar," or "appbar." The application desktop toolbar is a window that is similar to the Microsoft WINDOWS(R) taskbar, as it can be anchored to an edge of the screen and typically contains buttons that give the user quick access to other applications and windows. The operating system prevents other applications from using the desktop area occupied by an application desktop toolbar.

It will be appreciated that steps, operations, or processes described herein can be performed or implemented with one or more software modules or hardware modules, alone or in combination with other devices. It should further be understood that any portions of the system described in terms of hardware elements maybe implemented with software, and that software elements may be implemented with hardware, such as hard-coded into a dedicated circuit. For example, code for performing the methods can be embedded in a hardware device, such as an MP3 player, for example in an ASIC or other custom circuitry. In a hardware embodiment, portions or all of the methods can be performed by analog and/or digital circuitry. In one embodiment, a software module is implemented with a computer program product comprising a computer-readable medium containing computer program code, which can be executed by a computer processor for performing any or all of the steps, operations, or processes described herein.

Some portions of this description describe algorithms and symbolic representations of operations on information. These operations, while described functionally, computationally, or logically, are understood to be implemented by computer programs or equivalent electrical circuits, microcode, or the like.

It will be appreciated that modifications in, and variations to, the embodiments as described and illustrated may be made within the scope of the appended claims.

## Claims

1. A method for viewing video on a client device (140) by way of a media player (150) that comprises computer program code and is enabled to play received video data, wherein the client device (140) includes a display having an active area (210), the method comprising:
receiving video data at the client device (140) and rendering the video data into a playable video stream; and
playing the video stream in a window (220) of the media player (150), wherein the media player window is within the active area (210) of the display of the client device;
**characterised in that** the method further comprises:
placing the media player (150) into docked mode in which the active area (210) of the display is partitioned into a media player sidebar (230) for displaying the video stream, and a resized active area (210) for other applications running on the client device;
wherein the media player sidebar (230) is reserved for the media player (150) and is unavailable for the other applications.

2. A method for viewing video on a client device (140) by way of a media player (150) as claimed in Claim 1, wherein, in the docked mode, the media player (150) resizes, rescales and moves the active area (210) so that all other icons, windows, and other interface elements within the active area (210) are shifted to make room for placement of the media player sidebar (230).

3. A method as claimed in Claim 1, further comprising resizing the sidebar (230) in response to a user command.

4. A method as claimed in Claim 3, further comprising rescaling the active area (210) when the sidebar is resized.

5. A method as claimed in Claim 1, further comprising causing the media player to move the sidebar responsive to a user command.

6. A method as claimed in Claim 1, further comprising causing the media player (150) to adjust the media stream in response to user command.

7. A media player (150) that comprises computer program code enabling play of received video data on a client device (140), wherein the client device (140) includes a display having an active area (210),
wherein, when run on the client device (140), the media player (150) enables the client device (140) to receive video data and to render the video data into a playable video stream; and
wherein the video data is played within a window (220) of the media player (150), the media player window (220) being within the active area (210) of the display of the client device (140);
the media player (150) being **characterised in that** it is placeable into docked mode in which the active area (210) of the display is partitioned into a media player sidebar (230) for displaying the video stream, and a resized active area (210) for other applications running on the client device;
and **in that** the media player sidebar (230) is reserved for the media player (150) and is unavailable for the other applications.

8. A media player as claimed in Claim 7, comprising computer program code which, in response to a dock command creates the media player sidebar (230), reduces the active area (210), and rescales the active area (210).

9. A media player as claimed in Claim 7, wherein the active area (210) of the display comprises interfaces for other applications running on the client device (140), and the interfaces for the other applications are disallowed within the media player sidebar (230).

10. A media player as claimed in Claim 7, further comprising computer program code for:
receiving an undock command to undock the media player window;
eliminating the media player sidebar (230) from the display;
enlarging the active area (210) of the display;
rescaling the active area (210); and
playing the video stream in the media player window in the active area (210) of the display.

11. A media player as claimed in Claim 7, further comprising computer program code for:
receiving a resize command to resize the media player sidebar (230);
resizing the sidebar (230) according to the resize command;
resizing the active area (210) according to the resized sidebar (230); and
rescaling the active area of the display.

12. A media player as claimed in Claim 7, further comprising computer program code for:
receiving a move command to move the media player sidebar (230) to a different portion of the display;
moving the sidebar (230) according to the move command; and
adjusting the active area of the display according to the movement of the sidebar (230).

13. A media player as claimed in Claim 7, wherein the video data is received from a remote source, and the media player further contains computer program code for:
receiving a user command to adjust the video data received from a remote source; and
sending the user command to the remote source to adjust the video data received therefrom,
and wherein the media player sidebar (230) includes controls for a number of user commands to adjust the video data.

14. A media player as claimed in Claim 7, wherein the active area (210) of the display is a desktop of a windows-based operating system.

15. A media player as claimed in Claim 7, wherein the client device (140) comprises a cellular phone.

## Patentansprüche

1. Verfahren zum Ansehen von Videos auf einem Client-Gerät (140) mittels eines Mediaplayers (150), der einen Computerprogrammcode umfasst und dem ermöglicht wird, empfangene Videodaten abzuspielen, wobei das Client-Gerät (140) ein Display mit einem aktiven Bereich (210) umfasst, wobei das Verfahren Folgendes umfasst:
Empfangen von Videodaten auf dem Client-Gerät (140) und Rendern der Videodaten in einen abspielbaren Videostream; und
Abspielen des Videostreams in einem Fenster (220) des Mediaplayers (150), wobei das Fenster des Mediaplayers sich im aktiven Bereich (210) des Displays des Client-Geräts befindet;
**dadurch gekennzeichnet, dass** das Verfahren weiter Folgendes umfasst:
Bringen des Mediaplayers (150) in einen angekoppelten Modus, in dem der aktive Bereich (210) des Displays in eine Mediaplayer-Seitenleiste (230) zur Anzeige des Videostreams und einen aktiven Bereich (210) mit veränderter Größe für andere auf dem Client-Gerät ausgeführte Anwendungen unterteilt ist;
wobei die Mediaplayer-Seitenleiste (230) für den Mediaplayer (150) reserviert ist und für die anderen Anwendungen nicht verfügbar ist.

2. Verfahren zum Ansehen von Videos auf einem Client-Gerät (140) mittels eines Mediaplayers (150) nach Anspruch 1, wobei, im angekoppelten Modus, der Mediaplayer (150) die Größe des aktiven Bereichs (210) verändert, ihn neu skaliert und verschiebt, sodass alle anderen Symbole, Fenster, und andere Schnittstellenelemente im aktiven Bereich (210) versetzt werden, um Platz für das Platzieren der Mediaplayer-Seitenleiste (230) zu machen.

3. Verfahren nach Anspruch 1, weiter umfassend das Verändern der Größe der Seitenleiste (230) als Reaktion auf einen Nutzerbefehl.

4. Verfahren nach Anspruch 3, weiter umfassend das Neuskalieren des aktiven Bereichs (210), wenn die Größe der Seitenleiste verändert wird.

5. Verfahren nach Anspruch 1, weiter umfassend das Bewirken, dass der Mediaplayer die Seitenleiste als Reaktion auf einen Nutzerbefehl verschiebt.

6. Verfahren nach Anspruch 1, weiter umfassend das Bewirken, dass der Mediaplayer (150) den Medienstream als Reaktion auf einen Benutzerbefehl anpasst.

7. Mediaplayer (150), der einen Computerprogrammcode umfasst, der das Abspielen von empfangenen Videodaten auf einem Client-Gerät (140) ermöglicht, wobei das Client-Gerät (140) ein Display mit einem aktiven Bereich (210) umfasst,
wobei, wenn er auf dem Client-Gerät (140) ausgeführt wird, der Mediaplayer (150) dem Client-Gerät (140) ermöglicht, Videodaten zu empfangen und die Videodaten in einen abspielbaren Videostream zu rendern; und
wobei die Videodaten in einem Fenster (220) des Mediaplayers (150) abgespielt werden, wobei sich das Fenster (220) des Mediaplayers im aktiven Bereich (210) des Displays des Client-Geräts (140) befindet;
wobei der Mediaplayer (150) **dadurch gekennzeichnet ist, dass** er in den angekoppelten Modus bringbar ist, in dem der aktive Bereich (210) des Displays in eine Mediaplayer-Seitenleiste (230) zur Anzeige des Videostreams und einen aktiven Bereich (210) mit veränderter Größe für andere auf dem Client-Gerät ausgeführte Anwendungen unterteilt ist;
und dadurch, dass die Mediaplayer-Seitenleiste (230) für den Mediaplayer (150) reserviert ist und für die anderen Anwendungen nicht verfügbar ist.

8. Mediaplayer nach Anspruch 7, umfassend einen Computerprogrammcode, der als Reaktion auf einen Ankoppelbefehl die Mediaplayer-Seitenleiste (230) erstellt, den aktiven Bereich (210) reduziert und den aktiven Bereich (210) neu skaliert.

9. Mediaplayer nach Anspruch 7, wobei der aktive Bereich (210) des Displays Schnittstellen für andere auf dem Client-Gerät (140) ausgeführte Anwendungen umfasst, und die Schnittstellen für die anderen Anwendungen in der Mediaplayer-Seitenleiste (230) nicht erlaubt sind.

10. Mediaplayer nach Anspruch 7, weiter umfassend einen Computerprogrammcode zum:
Empfangen eines Abkoppelbefehls zum Abkoppeln des Fensters des Mediaplayers;
Entfernen der Mediaplayer-Seitenleiste (230) vom Display;
Vergrößern des aktiven Bereichs (210) des Displays;
Neuskalieren des aktiven Bereichs (210); und
Abspielen des Videostreams im Fenster des Mediaplayers im aktiven Bereich (210) des Displays.

11. Mediaplayer nach Anspruch 7, weiter umfassend einen Computerprogrammcode zum:
Empfangen eines Größenveränderungsbefehls zum Verändern der Größe der Mediaplayer-Seitenleiste (230);
Verändern der Größe der Seitenleiste (230) gemäß dem Größenveränderungsbefehl;
Verändern der Größe des aktiven Bereichs (210) gemäß der Seitenleiste (230) mit veränderter Größe; und
Neuskalieren des aktiven Bereichs der Anzeige.

12. Mediaplayer nach Anspruch 7, weiter umfassend einen Computerprogrammcode zum:
Empfangen eines Verschiebebefehls zum Verschieben der Mediaplayer-Seitenleiste (230) zu einem anderen Abschnitt des Displays;
Verschieben der Seitenleiste (230) gemäß dem Verschiebebefehl; und
Anpassen des aktiven Bereichs des Displays gemäß der Verschiebung der Seitenleiste (230).

13. Mediaplayer nach Anspruch 7, wobei die Videodaten von einer externen Quelle empfangen werden, und der Mediaplayer weiter einen Computerprogrammcode für Folgendes enthält:
Empfangen eines Nutzerbefehls zum Anpassen der von einer externen Quelle empfangenen Videodaten; und
Senden des Nutzerbefehls an die externe Quelle zum Anpassen der davon empfangenen Videodaten,
und wobei die Mediaplayer-Seitenleiste (230) Steuerungen für eine Anzahl von Nutzerbefehlen zum Anpassen der Videodaten umfasst.

14. Mediaplayer nach Anspruch 7, wobei der aktive Bereich (210) des Displays ein Desktop eines windowsbasierten Betriebssystems ist.

15. Mediaplayer nach Anspruch 7, wobei das Client-Gerät (140) ein Mobiltelefon umfasst.

## Revendications

1. Une méthode de visualisation de vidéos sur un périphérique client (140) par le biais d'un lecteur média (150) comprenant un code de logiciel et habilité pour lire des données vidéo reçues, le périphérique client (140) comprenant un écran d'affichage avec une zone active (210), la méthode comprenant :
la réception de données vidéo au périphérique client (140), et l'adaptation des données vidéo afin qu'elles puissent être reproduites dans un flux vidéo lisible ; et
la lecture du flux vidéo dans une fenêtre (220) du lecteur média (150), la fenêtre du lecteur média se trouvant dans la zone active (210) de l'écran d'affichage du périphérique client ;
**caractérisée en ce que** la méthode comprend en outre :
le placement du lecteur média (150) en mode dock, dans lequel la zone active (210) de l'écran est cloisonnée dans une barre latérale (230) de lecteur média, pour l'affichage du flux vidéo, et une zone active redimensionnée (210) pour d'autres applications fonctionnant sur le périphérique client ;
la barre latérale (230) de lecteur média étant réservée pour le lecteur média (150), et indisponible pour les autres applications.

2. Une méthode de visualisation sur un périphérique client (140) à travers un lecteur média (150), selon la revendication 1, dans lequel, en mode dock, le lecteur média (150) se redimensionne, se recadre et déplace la zone active (210), de sorte que toutes les autres icônes et fenêtres, ainsi que les autres éléments d'interface au sein de la zone active (210), sont déplacés afin de faire place pour la mise en place de la barre latérale du lecteur média (230).

3. Une méthode selon la revendication de la Revendication 1, comprenant en outre le redimensionnement de la barre latérale (230) en réponse à une commande de l'utilisateur.

4. Une méthode selon la revendication de la Revendication 3, comprenant en outre le recadrage de la zone active (210) lors du redimensionnement de la barre latérale.

5. Une méthode selon la revendication de la Revendication 1, comprenant en outre la détermination du déplacement, par le lecteur média, de la barre latérale répondant à une commande de l'utilisateur.

6. Une méthode selon la revendication de la Revendication 1, comprenant en outre la détermination de l'ajustage, par le lecteur média (150), du flux de média en réponse à une commande de l'utilisateur.

7. Un lecteur média (150) comprenant le code du logiciel permettant la lecture de données vidéo reçues sur un périphérique client (140), le périphérique client (140) comprenant un dispositif d'affichage possédant une zone active (210),
le lecteur média (150) permettant au périphérique client (140), lorsqu'il est utilisé sur ce dernier, de recevoir des données vidéo et d'adapter les données vidéo pour les utiliser dans un flux vidéo lisible ; et
les données vidéo étant lues dans une fenêtre (220) du lecteur média (150), la fenêtre (220) du lecteur média se trouvant dans la zone active (210) de l'écran d'affichage du périphérique client (140) ;
le lecteur média (150) étant **caractérisé par le fait qu'**il peut être placé en mode dock, dans lequel la zone active (210) de l'écran d'affichage étant partitionnée dans une barre latérale (230) du lecteur média pour l'affichage du flux vidéo, et une zone active (210) redimensionnée pour toutes les autres applications fonctionnant sur le dispositif du client ;
et la barre latérale (230) du lecteur média étant réservée au lecteur média (150), et indisponible pour les autres applications.

8. Un lecteur média selon la revendication 7, comprenant un code de logiciel qui, en réponse à une commande de dock, crée la barre latérale (230) du lecteur média, réduit la zone active (210), et recadre la zone active (210).

9. Un lecteur média selon la revendication 7, dans lequel la zone active (210) de l'écran d'affichage comprend des interfaces pour d'autres applications fonctionnant sur le périphérique client (140), et les interfaces pour toutes les autres applications sont refusées au sein de la barre latérale (230) du lecteur média.

10. Un lecteur média selon la revendication 7, comprenant en outre un code de logiciel pour :
recevoir une commande de désancrage de la fenêtre du lecteur média ;
éliminer la barre latérale (230) du lecteur média de l'écran d'affichage ;
agrandir la zone active (210) de l'écran d'affichage ;
recadrer la zone active (210) ; et
lire le flux vidéo dans la fenêtre du lecteur média dans la zone active (210) de l'écran d'affichage.

11. Un lecteur média selon la revendication 7, comprenant en outre un code de logiciel pour :
recevoir une commande de redimensionnement de la barre latérale (230) du lecteur média ;
redimensionner la barre latérale (230) selon la commande de redimensionnement ;
redimensionner la zone active (210) selon la barre latérale (230) redimensionnée ; et
recadrer la zone active de l'écran d'affichage.

12. Un lecteur média selon la revendication 7, comprenant en outre un code de logiciel pour :
recevoir une commande de déplacement de la barre latérale (230) du lecteur média ;
déplacer la barre latérale (230) selon la commande de déplacement ; et
ajuster la zone active de l'écran d'affichage selon le déplacement de la barre latérale (230).

13. Un lecteur média selon la revendication 7, dans lequel les données vidéo sont reçues d'une source éloignée, et le lecteur média contient en outre un code de logiciel pour :
recevoir une commande d'utilisateur pour ajuster les données de vidéo reçues d'une source éloignée ; et
transmettre la commande d'utilisateur à la source éloignée, afin d'ajuster les données de vidéo reçues de cette dernière,
et la barre latérale (230) du lecteur média comprenant des commandes pour un certain nombre de commandes utilisateur pour ajuster les données vidéo.

14. Un lecteur média selon la revendication 7, dans lequel la zone active (210) de l'écran d'affichage est un ordinateur d'un système d'exploitation fonctionnant sous Windows.

15. Un lecteur média selon la revendication 7, dans lequel le périphérique client (140) comprend un téléphone mobile.
